(19) Europäisches Patentamt
European Patent Office
Office européen des brevets

(11) **EP 3 186 329 B1**

(12) **EUROPEAN PATENT SPECIFICATION**

(45) Date of publication and mention
of the grant of the patent:
**09.01.2019 Bulletin 2019/02**

(21) Application number: **15757013.6**

(22) Date of filing: **17.08.2015**

(51) Int Cl.:
**C09J 153/02** (2006.01)

(86) International application number:
**PCT/JP2015/004057**

(87) International publication number:
**WO 2016/031170 (03.03.2016 Gazette 2016/09)**

(54) **HOT-MELT ADHESIVE AGENT**

SCHMELZKLEBSTOFF

AGENT ADHÉSIF THERMOFUSIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2014 JP 2014171831**

(43) Date of publication of application:
**05.07.2017 Bulletin 2017/27**

(73) Proprietor: **Henkel AG & Co. KGaA
40589 Düsseldorf (DE)**

(72) Inventor: **KIYOHARA, Takeshi**
**Minoo-shi**
**Osaka 562-8586 (JP)**

(74) Representative: **Viering, Jentschura & Partner
mbB
Patent- und Rechtsanwälte
Kennedydamm 55 / Roßstrasse
40476 Düsseldorf (DE)**

(56) References cited:
**EP-A1- 1 564 275        EP-A1- 2 980 179
WO-A1-2014/157220    WO-A1-2014/175410
WO-A1-2014/189150**

**Description**

Technical Field

The present invention relates to a hot-melt adhesive agent, and more particularly to a hot-melt adhesive agent used in the field of disposable products typified by a paper diaper and a napkin.

Background Art

An adhesive agent containing a thermoplastic block copolymer as a main component has been used in disposable products typified by a paper diaper and a napkin and, particularly, a hot-melt adhesive agent based on a styrene-based block copolymer has widely been used. For example, a paper diaper is produced by bonding a polyethylene film to other members (for example, a nonwoven fabric, an elastic material such as natural rubber, water-absorbing paper, etc.) with a hot-melt adhesive agent. The hot-melt adhesive agent can be applied to various constituent members using various methods and, by using any of such methods, the hot-melt adhesive agent is melted by heating so as to obtain an appropriate viscosity, and then the molten adhesive agent is applied to various constituent members in a dot, linear, stripe, spiral or planar form.

It is now required for the paper diaper to improve feeling thereof, and a study has been made to improve flexibility and feeling of the paper diaper by more reducing the thickness of a polyethylene film or the above-mentioned various members such as a nonwoven fabric. Reducing the thickness of the various members more significantly reduces material costs. However, the reduction in the thickness of the polyethylene film may cause a problem that heat resistance deteriorates and application of a high-temperature (not lower than 150°C) hot-melt adhesive agent leads to melting of the polyethylene film or formation of wrinkles of the polyethylene film. Therefore, adhesive agent manufacturers advance the development of a low-temperature-applicable hot-melt adhesive agent which can be coated at low temperature (not higher than 140°C).

Taking workability and environmental aspects in the case of application of the hot-melt adhesive agent into account, manufacturers producing paper diapers and sanitary goods strongly desire that the viscosity of the hot-melt adhesive agent be lowered. The hot-melt adhesive agent commonly comprises a base polymer and a plasticizer, and a study has been made to lower the viscosity of the hot-melt adhesive agent by a method in which the amount of the base polymer is decreased to thereby increase the amount of the plasticizer, and the like. However, the production of a paper diaper using a low viscosity hot-melt adhesive agent produced using such methods may cause a problem that the balance between adhesiveness to a polyethylene film and the like which compose members of the paper diaper and a retention force (cohesive force) is deteriorated, and the softening point is excessively lowered.

There is also a paper diaper including a rubber thread incorporated thereinto. In the case of incorporating the rubber thread into the paper diaper, the stretched rubber thread is bonded to a paper diaper body. A hot-melt adhesive agent is usually used as the adhesive agent. The paper diaper body commonly has no elasticity. Therefore, the paper diaper including the rubber thread bonded thereto is folded by a shrinkage force of the rubber thread when the rubber thread bonded to the paper diaper shrinks. As a result, a stretching and shrinkage force of the rubber thread are applied to the paper diaper body, and thus enabling the paper diaper to fit the body.

However, if the hot-melt adhesive agent used in bonding of the rubber thread has insufficient creep resistance, it becomes impossible for the hot-melt adhesive agent to hold the rubber thread, which is inclined to shrink, at a position where the rubber thread was bonded to the paper diaper body. That is, only the rubber thread shrinks without accompanying the paper diaper body. In that case, even if the rubber thread shrinks, the paper diaper body is not folded and thus a stretching and shrinkage force of the rubber thread is not applied to the paper diaper body. Therefore, the paper diaper fails to fit the body.

Recently, since it is desired that the thread rubber be held in a more highly stretched state, higher creep resistance is desired for the hot-melt adhesive agent.

Patent Literatures 1 to 4 disclose hot-melt adhesive agents based on a styrene-based block copolymer.

Patent Literature 1 discloses a hot-melt adhesive agent obtained by blending a styrene block copolymer having a radial structure and a styrene block copolymer having a linear structure, and used for fixing elastic strands. However, the hot-melt adhesive agent of Patent Literature 1 is poor in fixing properties when the elastic strands are greatly stretched, and creep resistance is still insufficient.

Patent Document 2 discloses a hot-melt adhesive agent comprising a radial type styrene block copolymer (claim 1). However, since the hot-melt adhesive agents of these literatures comprise a high-viscosity radial type styrene block copolymer, they are not suitable for low temperature coating. They do not have sufficient creep resistance either.

Patent Literature 3 discloses a hot-melt adhesive agent comprising a styrene-butadiene-styrene block copolymer having a high styrene content (claim 1, paragraphs [0068] Table 1, [0072] Table 2). Also in the hot-melt adhesive agent of the Literature 3, the balance between low temperature coating and creep resistance is not sufficient. Considering the production efficiency of paper diapers, the hot-melt adhesive agent of the Literature 3 does not completely meet high requirements of product manufacturers.

Patent Literature 4 discloses a hot melt adhesive comprising a radial block copolymer $(PS-PI-PB)_nX$ wherein PS is polystyrene, PI is polyisoprene and PB is polybutadiene, X is the residue of a multifunctional coupling agent used in the production of the radial block copolymer, and n is equal to or greater than 3 and represents the number of PS-PI-PB arms appended to X,

a linear block copolymer, and

a tackifying resin,

wherein, based on the weight of the adhesive composition, the radial block copolymer is present in amounts of from about 15 wt % to about 35 wt %, the linear polymer is present in amounts up to about 20 wt %, the tackifying resin is present in amounts of from about 30 to about 70 wt %. Furthermore, an article comprising this hot melt adhesive and a substrate and a method for bonding a first substrate with a second substrate by applying the hot melt adhesive is disclosed.

Related Art Literatures

Patent Literatures

Patent Literature 1: JP 2005-255993 A
Patent Literature 2: JP 2006-8947 A
Patent Literature 3: JP 2010-506005 A
Patent Literature 4 (D1): EP 1 564 275 A1

Disclosure of the Invention

Problems to be solved by the Invention

It is an object of the present invention to provide a hot-melt adhesive agent, which can be coated at low temperature, and has excellent creep resistance, and a disposable product obtained by employing the hot-melt adhesive agent.

Means for Solving the Problems

The present invention provides a hot-melt adhesive agent comprising a thermoplastic block copolymer resin composition (A) of copolymers of vinyl-based aromatic hydrocarbons and conjugated diene compounds, wherein the thermoplastic block copolymer resin composition (A) comprises the following component (A1) and component (A2):

(A1) a radial type styrene block copolymer having a styrene content of 35 to 45% by weight, a diblock content of 50 to 90% by weight, and a viscosity at 25°C as a 25% by weight toluene solution of not more than 250 mPa·s; and
(A2) a linear type styrene block copolymer having a styrene content of 40 to 50% by weight, and a viscosity at 25°C as a 25% by weight toluene solution of not more than 250 mPa·s,

a tackifier resin (B) and
a plasticizer (C), wherein
the tackifier resin (B) includes an end-block resin of an aromatic monomer having a polymerizable unsaturated group.

In one embodiment, the radial type styrene block copolymer (A1) includes a three branched type styrene block copolymer.

In one embodiment, the linear type styrene block copolymer (A2) includes at least one selected from a styrene-butadiene block copolymer and a styrene-isoprene block copolymer.

In one embodiment, the hot-melt adhesive agent is used for fixing a rubber thread to a body of a disposable product.

The present invention provides a disposable product obtained by applying the hot-melt adhesive agent of any one of the above.

Effects of the Invention

Since the hot-melt adhesive agent of the present invention has a low melt viscosity, it can be coated at low temperature, and also has excellent creep resistance.

When a rubber thread is incorporated into the disposable product of the present invention, since the rubber thread can be held in the product body in a state in which it is greatly stretched, the disposable product has excellent fitting properties to the body.

Embodiments for Carrying Out the Invention

As used herein, the "vinyl-based aromatic hydrocarbon" means an aromatic hydrocarbon compound having a vinyl group, and specific examples thereof include styrene, o-methylstyrene, p-methylstyrene, p-tert-butylstyrene, 1,3-dimethylstyrene, $\alpha$-methylstyrene, vinylnaphthalene, vinylanthracene, and the like. Particularly, styrene is preferable. These vinyl-based aromatic hydrocarbons can be used alone or in combination.

The "conjugated diene compound" means a diolefin compound having at least a pair of conjugated double bonds. Specific examples of the "conjugated diene compound" include 1,3-butadiene, 2-methyl-1,3-butadiene (or isoprene), 2,3-dimethyl-1,3-butadiene, 1,3-pentadiene, and 1,3-hexadiene. Particularly, 1,3-butadiene and 2-methyl-1,3-butadiene are preferable. These conjugated diene compounds can be used alone or in combination.

The thermoplastic block copolymer resin composition (A) according to the present invention may be either an unhydrogenated product or a hydrogenated product.

Specific examples of the "unhydrogenated product of the thermoplastic block copolymer resin composition (A)" include those in which blocks based on the conjugated diene compound are not hydrogenated. Specific examples of the "hydrogenated product of the thermoplastic block copolymer resin composition (A)" include block copolymers in which blocks based on the conjugated diene compound are entirely or partially hydrogenated.

A proportion that the "hydrogenated product of the thermoplastic block copolymer resin composition (A)" is hydrogenated can be indicated by a "hydrogenation ratio". The "hydrogenation ratio" of the "hydrogenated product of the thermoplastic block copolymer resin composition (A)" refers to a proportion of double bonds converted into saturated hydrocarbon bonds by hydrogenation on the basis of all aliphatic double bonds included in the blocks based on the conjugated diene compound. The "hydrogenation ratio" can be measured by an infrared spectrophotometer, a nuclear magnetic resonance spectrometer, and the like.

Specific examples of the "unhydrogenated product of the thermoplastic block copolymer resin composition (A)" include a styrene-isoprene block copolymer (also referred to as "SIS") and a styrene-butadiene block copolymer (also referred to as "SBS"). Specific examples of the "hydrogenated product of the thermoplastic block copolymer resin composition (A)" include a hydrogenated styrene-isoprene block copolymer (also referred to as "SEPS") and a hydrogenated styrene-butadiene block copolymer (also referred to as "SEBS").

The hot-melt adhesive agent of the present invention includes, as the thermoplastic block copolymer resin composition (A), a radial type styrene block copolymer (A1) and a linear type styrene block copolymer (A2).

The content of (A1) is 20 to 60 parts by weight, and preferably 30 to 50 parts by weight, based on 100 parts by weight of the total weight of (A). The content of (A1) within the above range further improves low-temperature coating performance, and creep resistance of the hot-melt adhesive agent, so that it becomes suitable for the use in disposable products.

In the present description, the radial type styrene block copolymer is a branched styrene block copolymer having a structure in which a plurality of linear type styrene block copolymers radially project from a coupling agent as the center. The linear type styrene block copolymer is a linear copolymer in which blocks of styrene are combined with blocks of conjugated diene.

A specific structure of the radial type styrene block copolymer is shown below.

[Chemical Formula 1]

$$(S - E)_n Y \qquad (1)$$

In the formula, n is an integer of not less than 2, S is a styrene block, E is a conjugated diene compound block, and Y is a coupling agent. n is preferably 3 or 4, and n is particularly preferably 3. The copolymer in which n is 3 is referred to as a three branched type, while the copolymer in which n is 4 is referred to as a four branched type. When n is 3, the obtained hot-melt adhesive agent exhibits low melt viscosity and high retention force (cohesive force). The conjugated diene compound is preferably butadiene or isoprene.

Note, however, the radial type styrene block copolymer (A1) in the present invention is a resin composition, and it contains a styrene-conjugated diene block copolymer represented by the formula:

[Chemical Formula 2]

$$S - E \qquad (2)$$

wherein S and E have the same meanings as defined above, at a given proportion. The styrene-conjugated diene block copolymer of the formula (2) is sometimes referred to as "diblock".

The coupling agent is a polyfunctional compound which radially combines linear type styrene block copolymers. There is no particular limitation on the type of coupling agent.

Examples of the coupling agent include a silane compound such as halogenated silane or alkoxysilane, a tin compound such as halogenated tin, an epoxy compound such as a polycarboxylate ester or epoxydized soybean oil, an acrylic ester such as pentaerythritol tetraacrylate, a divinyl compound such as epoxysilane or divinylbenzene, and the like. Specific examples thereof include trichlorosilane, tribromosilane, tetrachlorosilane, tetrabromosilane, methyltrimethoxysilane, ethyltrimethoxysilane, vinyltrimethoxysilane, vinyltriethoxysilane, tetramethoxysilane, tetraethoxysilane, tetrachlorotin, diethyl adipate, and the like.

In the present invention, the radial type styrene block copolymer (A1) has a styrene content of 35 to 45% by weight, a diblock content of 50 to 90% by weight, and a viscosity at 25°C as a 25% by weight toluene solution of not more than 250 mPa·s.

The "styrene content" refers to a proportion of a styrene block included in (A1). The styrene content is 35 to 45% by weight, and more preferably 35 to 40% by weight.

The styrene content of (A1) within the above range makes the hot-melt adhesive agent of the present invention have excellent retention force (cohesive force) and creep resistance. Therefore, this enables a rubber thread having a stretching ratio of more than three times to be held in the body of the disposable product.

The "diblock content" refers to a proportion of a styrene-conjugated diene compound block copolymer of the formula (2) included in (A1). The diblock content is 50 to 90% by weight, and more preferably 55 to 85% by weight.

The diblock content of (A1) within the above range makes the hot-melt adhesive agent of the present invention have excellent creep resistance. The diblock content of (A1) of less than 50% by weight may sometimes cause deterioration of either of creep resistance, adhesiveness or tack of the hot-melt adhesive agent of the present invention, because components having a branched structure represented by the formula (1) are excessively increased. The diblock content of (A1) of more than 90% by weight makes it difficult to enhance the adhesiveness of the hot-melt adhesive agent even in the case of having a radial structure.

The "viscosity at 25°C as a 25% by weight toluene solution" refers to a viscosity at 25°C as a solution having a concentration of 25% by weight using toluene as a solvent, and can be measured using various viscometers, for example, a Brookfield BM-type viscometer (spindle No. 2).

The viscosity at 25°C as a 25% by weight toluene solution" of (A1) is not more than 250 mPa·s, and preferably ranges from 100 to 250 mPa·s. Particularly, the viscosity is more preferably 130 to 200 mPa·s.

In the hot-melt adhesive agent of the present invention, the viscosity at 25°C as a 25% by weight toluene solution" of (A1) within the above range significantly decrease the melt viscosity, leading to easy coating at low temperature.

Commercially available products can be used as the radial type styrene block copolymer (A1). For example, HJ10, HJ12, HJ13, and HJ15 (all of which are trade names) available from Asahi Kasei Chemicals Corporation are exemplified.

In the present invention, the thermoplastic block copolymer (A) includes a linear type styrene block copolymer (A2). In the present specification, the "linear type" means a linear structure. The "linear type styrene block copolymer" is a straight-chain (linear) styrene block copolymer.

In the present invention, the linear type styrene block copolymer (A2) has a styrene content of 40 to 50 % by weight, and a viscosity at 25°C as a 25% by weight toluene solution of not more than 250 mPa·s. Therefore, the linear type styrene block copolymer (A2) is clearly distinguished from the radial type styrene block copolymer (A1).

The linear type styrene block copolymer (A2) preferably has a styrene content of 41 to 45% by weight, and more preferably 41 to 43% by weight. The linear type styrene block copolymer (A2) preferably has a diblock content of not more than 70% by weight, and more preferably not more than 60% by weight.

Inclusion of (A2) in the hot-melt adhesive agent of the present invention further enhances creep resistance (elasticity maintenance of the rubber thread) while maintaining a low viscosity.

The linear type styrene block copolymer (A2) preferably has a viscosity at 25°C as a 25% by weight toluene solution of not more than 250 mPa·s, and more preferably 100 to 200 mPa·s.

The content of (A2) is 40 to 80 parts by weight, preferably 50 to 70 parts by weight, based on 100 parts by weight of the total weight of (A). The content of (A2) within the above range further improves creep resistance and low-temperature coating performance of the hot-melt adhesive agent, so that it is suited for the use of disposable products.

The linear type styrene block copolymer (A2) preferably includes at least one selected from a styrene-butadiene block copolymer and a styrene-isoprene block copolymer. Including the styrene-butadiene block copolymer and/or the styrene-isoprene block in the hot-melt adhesive agent of the present invention further improves creep resistance, so that it is suited for the use of paper diapers.

Commercially available products can be used as the linear type styrene block copolymer (A2). For example, Asaprene T439 (trade name) manufactured by Asahi Kasei Chemicals Corporation, "Kraton D1162 PT" (trade name) manufactured by Kraton Polymers LLC are exemplified.

The hot-melt adhesive agent of the present invention includes a tackifier resin (B) and a plasticizer (C). The tackifier resin (B) imparts appropriate tack required for a hot-melt adhesive agent, and the plasticizer (C) adjusts the viscosity of the hot-melt adhesive agent, so that low-temperature coating performance can be improved.

The tackifier resin (B) includes an end-block resin of an aromatic monomer having a polymerizable unsaturated group. Further tackifier resins, which can additionally be present as further tackifier resin (B) are not particularly limited as long as they are usually used for the hot-melt adhesive agent and the objective hot-melt adhesive agent of the present invention is obtained.

Examples of such further tackifier resin (B) include a natural rosin, a modified rosin, a hydrogenated rosin, a glycerol ester of a natural rosin, a glycerol ester of a modified rosin, a pentaerythritol ester of a natural rosin, a pentaerythritol ester of a modified rosin, a pentaerythritol ester of a hydrogenated rosin, a copolymer of a natural terpene, a three dimensional polymer of a natural terpene, hydrogenated derivatives of a copolymer of a hydrogenated terpene, a polyterpene resin, hydrogenated derivatives of a phenol-based modified terpene resin, an aliphatic petroleum hydrocarbon resin, hydrogenated derivatives of an aliphatic petroleum hydrocarbon resin, an aromatic petroleum hydrocarbon resin, hydrogenated derivatives of an aromatic petroleum hydrocarbon resin, a cyclic aliphatic petroleum hydrocarbon resin, and hydrogenated derivatives of a cyclic aliphatic petroleum hydrocarbon resin. These tackifier resins can be used alone or in combination. It is also possible to use, as the tackifier resin, a liquid type tackifier resin as long as it has a colorless to pale yellow color tone and has substantially no odor, and also has satisfactory thermal stability.

It is possible to use, as the further tackifier resin (B), commercially available products. Examples of such commercially available products include ECR 179EX (trade name) manufactured by Tonex Co., Ltd.; Maruka Clear H (trade name) manufactured by Maruzen Petrochemical Co., LTD.; Alcon M100 (trade name) manufactured by Arakawa Chemical Industries, Ltd.; I-MARV S100 (trade name) manufactured by Idemitsu Kosan Co., Ltd.; Clearon K100 (trade name), Clearon K4090 (trade name) and Clearon K4100 manufactured by YASUHARA CHEMICAL CO., LTD.; ECR 179EX (trade name) and ECR 231C (trade name) manufactured by Tonex Co., Ltd.; Regalite C6100L (trade name) and Regalite C8010 (trade name) manufactured by Eastman Chemical Company; and FTR 2140 (trade name) manufactured by Mitsui Chemicals, Inc. Examples of the unhydrogenated tackifier resin include Quintone DX390N (trade name) and Quintone DX395 (trade name) manufactured by ZEON CORPORATION. These commercially available tackifier resins can be used alone or in combination.

The tackifier resin (B) includes an aromatic resin, which is referred to as an end-block resin. The end-block resin is a polymer of an aromatic monomer having a polymerizable unsaturated group. Typical examples of the aromatic monomer include styrenic monomers such as styrene, α-methylstyrene, vinyltoluene, methoxystyrene, tertiarybutylstyrene and chlorostyrene, and indene monomers such as indene and methylindene.

Inclusion of the end-block resin in the hot-melt adhesive agent of the present invention improves cohesive force, leading to enhanced adhesiveness and improved creep resistance.

In the present invention, the end-block resin is preferably an α-methylstyrene resin. Examples of commercially available products of the α-methylstyrene resin include KRISTALEX series and PLASTOLYN series manufactured by Eastman Chemical Company.

The plasticizer (C) is blended for the purpose of decreasing melt viscosity of the hot-melt adhesive agent, imparting flexibility to the hot-melt adhesive agent, and improving wettability of the hot-melt adhesive agent to an adherend. There is no particular limitation as long as the plasticizer is compatible with the block copolymer and the objective hot-melt adhesive agent of the present invention is obtainable. Examples of the plasticizer (C) include paraffin oil, naphthene oil and aromatic oil. Colorless and odorless paraffin oil is particularly preferable.

It is possible to use, as the plasticizer (C), commercially available products. Examples thereof include White Oil Broom 350 (trade name) manufactured by Kukdong Oil & Chemicals Co., Ltd.; Diana Fresia S32 (trade name), Diana Process Oil PW-90 (trade name) and DN Oil KP-68 (trade name) manufactured by Idemitsu Kosan Co., Ltd.; Enerper M1930 (trade name) manufactured by BP Chemicals, Inc.; Kaydol (trade name) manufactured by Crompton Corporation; Primol 352 (trade name) manufactured by ESSO Corp.; Process Oil NS-100 manufactured by Idemitsu Kosan Co., Ltd.; and KN 4010 (trade name) manufactured by PetroChina Company Limited. These plasticizers (C) can be used alone or in combination.

In the hot-melt adhesive agent of the present invention, the content of (A) is preferably 3 to 60 parts by weight, more preferably 10 to 45 parts by weight, and most preferably 20 to 35 parts by weight, based on 100 parts by weight of the total weight of (A) to (C). The content of (A) within the above range makes the hot-melt adhesive agent have excellent adhesiveness to a polyolefin substrate, and creep resistance, so that low temperature coating is enabled.

The content of (B) is preferably 30 to 90 parts by weight, more preferably 45 to 75 parts by weight, and most preferably 50 to 70 parts by weight, based on 100 parts by weight of the total weight of (A) to (C). Among (B), the end-block resin is preferably used in an amount of not more than 40 parts by weight, and more preferably 1 to 10 parts by weight, if necessary. The content of (C) is commonly 5 to 30 parts by weight, and preferably 9 to 15 parts by weight, based on 100 parts by weight of the total weight of (A) to (C).

If necessary, the hot-melt adhesive agent according to the present invention may further contain various additives. Examples of such various additives include a stabilizer and a fine particle filler.

The "stabilizer" is blended so as to prevent decrease in molecular weight, occurrence of gelation, coloration, odor and the like of the hot-melt adhesive agent due to heat, thereby improving stability of the hot-melt adhesive agent, and there is no particular limitation as long as the objective hot-melt adhesive agent of the present invention is obtainable. Examples of the "stabilizer" include an antioxidant and an ultraviolet absorber.

The "ultraviolet absorber" is used so as to improve light resistance of the hot-melt adhesive agent. The "antioxidant" is used so as to prevent oxidative degradation of the hot-melt adhesive agent. There is no particular limitation on the antioxidant and the ultraviolet absorber, as long as they are commonly used for disposable products and the below-mentioned objective disposable products are obtainable.

Examples of the antioxidant include phenol antioxidants, sulfur antioxidants and phosphorous antioxidants. Examples of the ultraviolet absorber include benzotriazole ultraviolet absorbers and benzophenone ultraviolet absorbers. It is also possible to add lactone stabilizers. These additives can be used alone or in combination.

It is possible to use, as the stabilizer, commercially available products. Examples thereof include SUMILIZER GM (trade name), SUMILIZER TPD (trade name) and SUMILIZER TPS (trade name) manufactured by Sumitomo Chemical Co. Ltd.; IRGANOX 1010 (trade name), IRGANOX HP2225FF (trade name), IRGAFOS 168 (trade name) and IRGANOX 1520 (trade name) manufactured by Ciba Specialty Chemicals Inc.; and JF77 (trade name) manufactured by Johoku Chemical Co., Ltd. These stabilizers can be used alone or in combination.

The hot-melt adhesive agent of the present invention is produced by blending the above components in a given proportion, optionally blending various additives, and melting the mixture with heating, followed by mixing. Specifically, the hot-melt adhesive agent is produced by charging the above components in a melt-mixing vessel equipped with a stirrer, followed by mixing with heating.

The obtained hot-melt adhesive agent preferably has a melt viscosity at 160°C of not more than 4,000 mPa·s and a melt viscosity at 140°C of not more than 10,000 mPa·s. The "melt viscosity" refers to a viscosity in molten state of the hot-melt adhesive agent and is measured by a Brookfield RVT-type viscometer (spindle No. 27). The hot-melt adhesive agent according to the present invention can be coated at low temperature (not higher than 150°C) because of having a viscosity at 140°C of not higher than 10,000 mPa·s.

The hot-melt adhesive agent according to the present invention preferably has a maintenance rate of not less than 80%, and more preferably more than 90%, measured by the method for evaluation of elasticity maintenance (creep resistance) of the rubber thread mentioned in Examples. The elasticity maintenance of not less than 80% enables the elasticity of the rubber thread incorporated into disposable products such as a paper diaper to be maintained, and thus the hot-melt adhesive agent is suitable for the use in disposable products.

The hot-melt adhesive agent according to the present invention can be used in paper processing, bookbinding, disposable products, and the like, and is mainly used in disposable products. There is no particular limitation on "disposable products" as long as they are so-called sanitary materials. Specific examples thereof include a paper diaper, a sanitary napkin, a pet sheet, a hospital gown, a surgical white garment, and the like.

The hot-melt adhesive agent of the present invention is particularly preferably used for the purpose of bonding a stretched rubber thread to a product body in the case of producing the above disposable product including the rubber thread incorporated therein.

The present invention provides, in another aspect, a disposable product obtained by, in particular non-contact, application of the above hot-melt adhesive agent, preferably at low temperature (not higher than 150°C). The disposable product is constituted by bonding at least one member selected from the group consisting of a woven fabric, a nonwoven fabric, a rubber, a resin and papers and a polyolefin film using the hot-melt adhesive agent according to the present invention. The polyolefin film is preferably a polyethylene film for the reason of durability, costs and the like.

In the production line for the disposable product, the hot-melt adhesive agent is commonly applied to at least one side of various members (for example, nonwoven fabric, etc.) of the disposable product, and a polyolefin film, and then the film is pressure bonded to the members to produce a disposable product. When applied, the hot-melt adhesive agent may be discharged from various ejectors. In the present invention, the "non-contact application" refers to a coating method in which a discharger is not brought into contact with a member or a film in the case of applying the hot-melt adhesive agent. Specific examples of the non-contact application method include a spiral coating method by which the hot-melt adhesive agent can be coated in a spiral form, an omega coating method or control seam coating method by which the hot-melt adhesive agent can be coated in a wavy form, a slot spray coating or curtain spray coating method by which the hot-melt adhesive agent can be coated in a planar form, a dot coating method by which the hot-melt adhesive agent can be coated in a dot form, and the like.

Examples

In the description of Examples, unless otherwise specified, parts by weight and percentages by weight are based on the portions where a solvent is not taken into account.

Components used in the present Examples are shown below.

(A) Thermoplastic block copolymer

(A1) Radial type styrene block copolymer

(A1-1) Three branched type styrene-butadiene block copolymer (styrene content of 40% by weight, diblock content of 70% by weight, viscosity at 25°C as a 25% by weight toluene solution of 184 mPa·s, HJ12-4 (trade name, manufactured by Asahi Kasei Chemicals Corporation)
(A1-2) Three branched type styrene-butadiene block copolymer (styrene content of 39% by weight, diblock content of 80% by weight, viscosity at 25°C as a 25% by weight toluene solution of 189 mPa·s, HJ13-2 (trade name, manufactured by Asahi Kasei Chemicals Corporation)
(A1-3) Three branched type styrene-butadiene block copolymer (styrene content of 38% by weight, diblock content of 60% by weight, viscosity at 25°C as a 25% by weight toluene solution of 177 mPa·s, HJ10 (trade name, manufactured by Asahi Kasei Chemicals Corporation)

(A2) Linear type styrene block copolymer

(A2-1) Linear type styrene-butadiene block copolymer (styrene content of 43% by weight, diblock content of 60% by weight, viscosity at 25°C as a 25% by weight toluene solution of 170 mPa·s, Asaprene T439 (trade name, manufactured by Asahi Kasei Chemicals Corporation)
(A2-2) Linear type styrene-isoprene block copolymer (styrene content of 41% by weight, diblock content of 0% by weight, viscosity at 25°C as a 25% by weight toluene solution of 120 mPa·s, Kraton D1162 PT (trade name, manufactured by Kraton Polymers LLC)

(A3) Other styrene block copolymers (not falling under (A1) or (A2)

(A3-1) Linear type styrene-butadiene block copolymer (styrene content of 40% by weight, diblock content of 0% by weight, viscosity at 25°C as a 25% by weight toluene solution of 570 mPa·s, Asaprene T125 (trade name, manufactured by Asahi Kasei Chemicals Corporation)
(A3-2) Linear type styrene-butadiene block copolymer (styrene content of 40% by weight, diblock content of 0% by weight, viscosity at 25°C as a 25% by weight toluene solution of 620 mPa·s, Taipol 4202 (trade name, manufactured by TSRC Corporation)
(A3-3) Three branched type styrene-butadiene block copolymer (styrene content of 35% by weight, diblock content of 40% by weight, viscosity at 25°C as a 25% by weight toluene solution of 490 mPa·s, JSR TR2500 (trade name, manufactured by JSR Corporation)
(A3-4) Linear type styrene-isoprene block copolymer (styrene content of 24% by weight, diblock content of 70% by weight, viscosity at 25°C as a 25% by weight toluene solution of 320 mPa·s, Quintac 3270 (trade name, manufactured by ZEON CORPORATION)
(A3-5) Four branched type styrene-butadiene block copolymer (styrene content of 40% by weight, diblock content of 20% by weight, viscosity at 25°C as a 25% by weight toluene solution of 400 mPa·s, SOL T6414 (trade name, manufactured by Enichem Inc))

(B) Tackifier resin

(B1) Hydrogenated tackifier resin (Alcon M100 (trade name, manufactured by Arakawa Chemical Industries, Ltd.))
(B2) Hydrogenated tackifier resin (ECR 179EX (trade name, manufactured by Exxon Mobil Corporation))
(B3) Hydrogenated tackifier resin (SUKOREZ SU420 (trade name, manufactured by Kolon Industries, Inc.)
(B4) Hydrogenated tackifier resin (I-MARV S100N (trade name, manufactured by Idemitsu Kosan Co., Ltd.))
(B5) End-block hydrogenated tackifier resin (FTR 2140 (trade name, manufactured by Mitsui Chemicals, Inc.))

(B6) End-block hydrogenated tackifier resin (Plastolyn 290 (trade name, manufactured by Eastman Chemical Company))

(C) Plasticizer

(C1) Paraffin oil (Diana Fresia S-32 (trade name, manufactured by Idemitsu Kosan Co., Ltd.))

(D) Antioxidants

(D1) Phenol antioxidant (SUMILIZER GM (trade name, manufactured by Sumitomo Chemical Co., Ltd.))
(D2) Sulfur antioxidant (SUMILIZER TPD (trade name, manufactured by Sumitomo Chemical Co., Ltd.))

Preparation of hot-melt adhesive agents of Examples 1 to 5 and Comparative Examples 1 to 5

The respective components were blended according to the formulations shown in Tables 1 to 2, and then melt-mixed at about 150°C to prepare hot-melt adhesive agents. In Tables 1 to 2, "St" means a styrene content, "diblock" means a diblock content, and "TV" means a viscosity at 25°C as a 25% by weight toluene solution.

[Table 1]

|  |  |  | Example 1 | Example 2 | Example 3 | Example 4 | Example 5 |
|---|---|---|---|---|---|---|---|
| (A) | (A1-1) | Three branched radial styrene-butadiene block copolymer (St: 40%, diblock: 70%, TV: 184 mPa·s), "HJ12-4" manufactured by Asahi Kasei Chemicals Corporation | 9 | 15 | 10 |  |  |
|  | (A1-2) | Three branched radial styrene-butadiene block copolymer (St: 39%, diblock: 80%, TV: 189 mPa·s), "HJ13-2" manufactured by Asahi Kasei Chemicals Corporation |  |  |  | 9 |  |
|  | (A1-3) | Three branched radial styrene-butadiene block copolymer (St: 38%, diblock: 60%, TV: 177 mPa·s), "HJ10" manufactured by Asahi Kasei Chemicals Corporation |  |  |  |  | 14 |
|  | (A2-1) | Linear styrene-butadiene block copolymer (St: 43%, diblock: 60%, TV: 170 mPa·s), "Asaprene T439" manufactured by Asahi Kasei Chemicals Corporation | 19 | 17 | 15 | 19 |  |
|  | (A2-2) | Linear styrene-isoprene block copolymer (St: 41%, diblock: 0%, TV: 120 mPa·s), "Kraton D1162 PT" manufactured by Kraton Polymers LLC |  |  | 5 |  | 14 |
|  | (A3-1) | Linear styrene-butadiene block copolymer (St: 40%, diblock: 0%, TV: 570 mPa·s), "Asaprene T125" manufactured by Asahi Kasei Chemicals Corporation |  |  |  |  |  |

(continued)

| | | | Example 1 | Example 2 | Example 3 | Example 4 | Example 5 |
|---|---|---|---|---|---|---|---|
| | (A3-2) | Linear styrene-butadiene block copolymer (St:40%, diblock: 0%, TV: 620 mPa·s), "Taipol 4202" manufactured by TSRC Corporation | | | | | |
| | (A3-3) | Three branched radial styrene-butadiene block copolymer (St: 35%, diblock: 40%, TV: 490 mPa·s), "JSR TR2500", manufactured by JSR Corporation | | | | | |
| | (A3-4) | Linear styrene-isoprene block copolymer (St: 24%, diblock: 70%, TV: 320 mPa·s), "Quintac 3270", manufactured by ZEON CORPORATION | | | | | |
| | (A3-5) | Four branched radial styrene-butadiene block copolymer (St: 40%, diblock: 20%, TV: 400 mPa·s), "Sol T6414" manufactured by Enichem Inc | | | | | |
| Total weight of (A) | | | 28 | 32 | 30 | 28 | 28 |
| (B) | (B1) | Tackifier resin (hydrogenated), "Alcon M100" manufactured by Arakawa Chemical Industries, Ltd. | | 56 | | 57 | |
| | (B2) | Tackifier resin (hydrogenated), "ECR 179EX" manufactured by Exxon Mobile Corporation | | | 35 | | 57 |
| | (B3) | Tackifier resin (hydrogenated), "SUKOREZ SU420 manufactured by Kolon Industries, Inc. | 10 | | | | |
| | (B4) | Tackifier resin (hydrogenated), "I-MARV S100" manufactured by Idemitsu Kosan Co., Ltd. | 47 | | 20 | | |
| | (B5) | Tackifier resin (End-block resin), "FTR 2140" manufactured by Mitsui Chemicals, Inc. | | | 4 | | 4 |
| | (B6) | Tackifier resin (End-block resin), "Plastolyn 290" manufactured by Eastman Chemical Company | 3.5 | 3 | | 3.5 | |
| (C) | (C1) | Paraffin oil, "Diana Fresia S-32" manufactured by Idemitsu Kosan Co., Ltd." | 11.5 | 9 | 11 | 11.5 | 11 |
| Total weight of (A) to (C) | | | 100 | 100 | 100 | 100 | 100 |

(continued)

| | | | Example 1 | Example 2 | Example 3 | Example 4 | Example 5 |
|---|---|---|---|---|---|---|---|
| (D) | (D1) | Antioxidant, "SUMILIZER GM" manufactured by Sumitomo Chemical Co., Ltd. | 0.2 | 0.2 | 0.2 | 0.2 | 0.2 |
| | (D2) | Antioxidant, "SUMILIZER TPD" manufactured by Sumitomo Chemical Co., Ltd. | 0.3 | 0.3 | 0.3 | 0.3 | 0.3 |

[Table 2]

| | | | Comp. Example 1 | Comp. Example 2 | Comp. Example 3 | Comp. Example 4 | Comp. Example 5 |
|---|---|---|---|---|---|---|---|
| (A) | (A1-1) | Three branched radial styrene-butadiene block copolymer (St: 40%, diblock: 70%, TV: 184 mPa·s), "HJ12-4" manufactured by Asahi Kasei Chemicals Corporation | 9 | 14 | | | 14 |
| | (A1-2) | Three branched radial styrene-butadiene block copolymer (St: 39%, diblock: 80%, TV: 189 mPa·s), "HJ13-2" manufactured by Asahi Kasei Chemicals Corporation | | | | | |
| | (A1-3) | Three branched radial styrene-butadiene block copolymer (St: 38%, diblock: 60%, TV: 177 mPa·s), "HJ10" manufactured by Asahi Kasei Chemicals Corporation | | | | | |
| | (A2-1) | Linear styrene-butadiene block copolymer (St: 43%, diblock: 60%, TV: 170 mPa·s), Asaprene T439 manufactured by Asahi Kasei Chemicals Corporation | | | 19 | 17 | |
| | (A2-2) | Linear styrene-isoprene block copolymer (St: 41%, diblock: 0%, TV: 120 mPa·s), "Kraton D1162 PT" manufactured by Kraton Polymers LLC | | | | | |
| | (A3-1) | Linear styrene-butadiene block copolymer (St: 40%, diblock: 0%, TV: 570 mPa·s), "Asaprene T125" manufactured by Asahi Kasei Chemicals Corporation | | | | | 14 |
| | (A3-2) | Linear styrene-butadiene block copolymer (St:40%, diblock: 0%, TV: 620 mPa·s), "Taipol 4202" manufactured by TSRC Corporation | 19 | | | | |

(continued)

| | | | Comp. Example 1 | Comp. Example 2 | Comp. Example 3 | Comp. Example 4 | Comp. Example 5 |
|---|---|---|---|---|---|---|---|
| | (A3-3) | Three branched radial styrene-butadiene block copolymer (St: 35%, diblock: 40%, TV: 490 mPa·s), "JSR TR2500" manufactured by JSR Corporation | | | | 15 | |
| | (A3-4) | Linear styrene-isoprene block copolymer (St: 24%, diblock: 70%, TV: 320 mPa·s), "Quintac 3270", manufactured by ZEON CORPOTATION | | 14 | | | |
| | (A3-5) | Four branched radial styrene-butadiene block copolymer (St: 40%, diblock: 20%, TV: 400 mPa·s), "Sol T6414" manufactured by Enichem Inc | | | 9 | | |
| Total weight of (A) | | | 28 | 28 | 28 | 32 | 28 |
| (B) | (B1) | Tackifier resin (hydrogenated), "Alcon M100" manufactured by Arakawa Chemical Industries, Ltd. | | | | 56 | |
| | (B2) | Tackifier resin (hydrogenated) "ECR 179EX" manufactured by Exxon Mobil Corporation | | 57 | | | 57 |
| | (B3) | Tackifier resin (hydrogenated), "SUKOREZ SU420" manufactured by Kolon Industries, Inc. | 10 | | 10 | | |
| | (B4) | Tackifier resin (hydrogenated), "I-MARV S100" manufactured by Idemitsu Kosan Co., Ltd. | 47 | | 47 | | |
| | (B5) | Tackifier resin (End-block resin), "FTR 2140" manufactured by Mitsui Chemicals, Inc. | | | | | 4 |
| | (B6) | Tackifier resin (End-block resin), "Plastolyn 290" manufactured by Eastman Chemical Company | 3.5 | 4 | 4 | 3 | |
| (C) | (C1) | Paraffin oil, "Diana Fresia S-32" manufactured by Idemitsu Kosan Co., Ltd." | 11.5 | 11 | 11 | 9 | 11 |
| Total weight of (A) to (C) | | | 100 | 100 | 100 | 100 | 100 |
| (D) | (D1) | Antioxidant, "SUMILIZER GM" manufactured by Sumitomo Chemical Co., Ltd. | 0.2 | 0.2 | 0.2 | 0.2 | 0.2 |
| | (D2) | Antioxidant, "SUMILIZER TPD" manufactured by Sumitomo Chemical Co., Ltd. | 0.3 | 0.3 | 0.3 | 0.3 | 0.3 |

With respect to the thus obtained hot-melt adhesive agents of Examples and Comparative Examples, a melt viscosity, coating temperature, and elasticity maintaining power of a rubber thread were examined. The results are shown in Tables 4 to 6. The above properties were evaluated by the following methods.

[Melt Viscosity]

A hot-melt adhesive agent was melted by heating at 140°C and 160°C, and then a viscosity in a molten state was measured using a Brookfield RVT type viscometer (spindle No. 27). Evaluation criteria are as follows.

| ○ | Viscosity at 140°C is not more than 10,000 mPa·s |
|---|---|
| × | Viscosity at 140°C is more than 10,000 mPa·s |

| ○ | Viscosity at 160°C is not more than 4,000 mPa·s |
|---|---|
| × | Viscosity at 160°C is more than 4,000 mPa·s |

[Coating Temperature]

A hot-melt adhesive agent was applied to a rubber thread by V-slit coating, and the coated rubber thread was drawn and glued to a nonwoven fabric to obtain coated samples. The coating temperature is the temperature at which the viscosity of a hot-melt adhesive agent becomes 7,000 mPa·s. The open time of a coating applicator was 0.5 seconds, and the coating weight was 0.04 g/m.

A urethane thread (LYCRA (registered trademark)) of 780 detex was used as the rubber thread. The draw ratio of the rubber thread was 3.4 times.

| ○ | Coating temperature is not more than 150°C |
|---|---|
| × | Coating temperature is more than 150°C |

[Elasticity Maintaining Power (Creep Resistance) of Rubber Thread]

In the case of evaluating the coating temperature, samples obtained by gluing a rubber thread to a nonwoven fabric were used. Each sample was cut into pieces of 250 mm to 300 mm in length and then glued to a corrugated cardboard sheet in a state of being completely drawn. After marking at any two points so that the rubber length of the specimen becomes 200 mm, using a permanent marker, the rubber was cut at the mark and then left to stand at 40°C for 1 hour.

After 1 hour, the rubber length was measured and the maintenance rate was calculated. The equation used to calculate the maintenance rate is as follows.

[Numerical Formula 1]

$$\text{Maintenance rate (\%)} = \text{rubber length after 1 hour (mm)} \times 100/200$$

| ○ | Maintenance rate is more than 80% |
|---|---|
| × | Maintenance rate is less than 80% |

[Table 3]

|  |  | Example 1 | Example 2 | Example 3 | Example 4 | Example 5 |
|---|---|---|---|---|---|---|
| Melt Viscosity (mPa·s) | 140°C | 7,490 | 9,800 | 8,900 | 7,350 | 6,900 |
|  |  | ○ | ○ | ○ | ○ | ○ |
|  | 160°C | 3,000 | 3,790 | 3,630 | 3,150 | 2,850 |
|  |  | ○ | ○ | ○ | ○ | ○ |
| Coating Test | Coating temperature (°C) | 140 | 150 | 145 | 140 | 140 |
|  |  | ○ | ○ | ○ | ○ | ○ |
|  | Rubber thread maintenance (%) | 88 | 93 | 85 | 80 | 84 |
|  |  | ○ | ○ | ○ | ○ | ○ |

[Table 4]

|  |  | Comp. Example 1 | Comp. Example 2 | Comp. Example 3 | Comp. Example 4 | Comp. Example 5 |
|---|---|---|---|---|---|---|
| Melt Viscosity (mPa·s) | 140°C | 21,850 | 7,500 | 11,850 | 21,400 | 6,900 |
|  |  | × | ○ | × | × | ○ |
|  | 160°C | 8,330 | 3,150 | 4,562 | 7,810 | 2,850 |
|  |  | × | ○ | × | × | ○ |
| Coating Test | Coating temperature | 165 | 150 | 155 | 160 | 150 |
|  |  | × | ○ | × | × | ○ |
|  | Rubber thread maintenance (%) | 89 | 55 | 90 | 91 | 71 |
|  |  | ○ | × | ○ | ○ | × |

As shown in Tables 1 to 4, the hot-melt adhesive agents of Examples are low in melt viscosity, excellent in low-temperature coating performance, and can fix the thread rubber to the body of the disposable product in a state in which the rubber thread is stretched three times or more its length since they include the component (A1) and component (A2).
To the contrary, the hot-melt adhesive agents of Comparative Examples are inferior in any one of the respective performances as compared with the hot-melt adhesive agents of Examples since they do not include either the component (A1) or component (A2).
Inclusion of both the (A1) and (A2) improves the above-mentioned performances of the hot-melt adhesive agent of the present invention. Thus, a paper diaper including a rubber thread coated with the hot-melt adhesive agent incorporated thereinto is easy to fit the body.

Industrial Applicability

The present invention provides a hot-melt adhesive agent, and a disposable product, which is obtained by coating the hot-melt adhesive agent. The hot-melt adhesive agent according to the present invention is particularly suitable for fixing the rubber thread to the body of the disposable product in a highly stretched state that is three times or more than its length.

**Claims**

1.  A hot-melt adhesive agent comprising a thermoplastic block copolymer resin composition (A) of copolymers of vinyl-based aromatic hydrocarbons and conjugated diene compounds, wherein the thermoplastic block copolymer resin composition (A) comprises the following component (A1) and component (A2):

(A1) a radial type styrene block copolymer having a styrene content of 35 to 45% by weight, a diblock content of 50 to 90% by weight, and a viscosity at 25°C as a 25% by weight toluene solution of not more than 250 mPa·s; and

(A2) a linear type styrene block copolymer having a styrene content of 40 to 50% by weight, and a viscosity at 25°C as a 25% by weight toluene solution of not more than 250 mPa·s,

a tackifier resin (B) and

a plasticizer (C), wherein

the tackifier resin (B) includes an end-block resin of an aromatic monomer having a polymerizable unsaturated group.

2. Use of the hot-melt adhesive agent according to claim 1 for fixing a rubber thread to a body of a disposable product.

3. A disposable product obtained by applying the hot-melt adhesive agent according to claim 1.

**Patentansprüche**

1. Schmelzklebstoff, umfassend eine thermoplastische Blockcopolymer-Harzzusammensetzung (A) aus Copolymeren von vinylbasierten aromatischen Kohlenwasserstoffen und konjugierten Dienverbindungen, wobei die thermoplastische Blockcopolymer-Harzzusammensetzung (A) die folgenden Komponente (A1) und Komponente (A2) umfasst:

(A1) ein Styrol-Blockcopolymer vom radialen Typ, welches einen Styrolgehalt von 35 bis 45 Gew.-%, einen Diblockgehalt von 50 bis 90 Gew.-%, und eine Viskosität bei 25 °C als 25 Gew.-% Toluollösung von nicht mehr als 250 mPa·s aufweist; und

(A2) ein Styrol-Blockcopolymer vom linearen Typ, welches einen Styrolgehalt von 40 bis 50 Gew.-%, und eine Viskosität bei 25 °C als 25 Gew.-% Toluollösung von nicht mehr als 250 mPa·s aufweist,

ein Klebrigmacherharz (B) und

einen Weichmacher (C), wobei

das Klebrigmacherharz (B) ein Endblock-Harz eines aromatischen Monomers enthält, welches eine polymerisierbare ungesättigte Gruppe aufweist.

2. Verwendung eines Schmelzklebstoffs nach Anspruch 1, zum Fixieren einer Gummifaser an einen Körper eines Einwegprodukts.

3. Einwegprodukt, welches durch Anwenden des Schmelzklebstoffs nach Anspruch 1 erhalten wird.

**Revendications**

1. Agent adhésif thermofusible comprenant une composition de résine à copolymère séquencé thermoplastique (A) de copolymères d'hydrocarbures aromatiques à base de vinyle et de composés diéniques conjugués, dans lequel la composition de résine copolymère séquencé thermoplastique (A) comprend le composant (A1) et le composant (A2) suivants :

(A1) un copolymère séquencé de styrène de type radial présentant une teneur en styrène entre 35 et 45 % en poids, une teneur en dibloc entre 50 et 90 % en poids et une viscosité à 25 °C sous forme de solution de toluène à 25 % en poids inférieure à 250 mPa.s; et

(A2) un copolymère séquencé de styrène de type linéaire présentant une teneur en styrène entre 40 et 50 % en poids et une viscosité à 25 °C sous forme de solution de toluène à 25 % en poids inférieure à 250 mPa.s,

une résine collante (B) et

un plastifiant (C), dans lequel

la résine collante (B) comprend une résine à blocs terminaux d'un monomère aromatique présentant un groupe insaturé polymérisable.

2. Utilisation de l'agent adhésif thermofusible selon la revendication 1 pour fixer un fil de caoutchouc à un corps d'un produit jetable.

3. Produit jetable obtenu par l'application de l'agent adhésif thermofusible selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005255993 A
- JP 2006008947 A
- JP 2010506005 A
- EP 1564275 A1